# EUROPÄISCHE PATENTSCHRIFT

(11) **EP 3 179 595 B1**
(45) Veröffentlichungstag und Bekanntmachung des Hinweises auf die Patenterteilung: **06.02.2019**
(21) Anmeldenummer: 16002606.8
(22) Anmeldetag: 06.12.2016
(51) Int. Cl.: H02J 3/38, H02M 7/64, H02P 11/06, H02S 40/38

(54) **VERFAHREN ZUM BETRIEB EINES SOLARKRAFTWERKES**
METHOD FOR OPERATING A SOLAR POWER PLANT
PROCÉDÉ DE FONCTIONNEMENT D'UNE CENTRALE SOLAIRE

(30) Priorität: 07.12.2015 DE 102015016069
(43) Veröffentlichungstag der Anmeldung: 14.06.2017
(73) Patentinhaber: INW Beteiligungs GmbH, 22297 Hamburg (DE)
(72) Erfinder: MEUSER, Peter, 17034 Neubrandenburg (DE)
(74) Vertreter: Kietzmann, Manfred

(56) Entgegenhaltungen:
- EP-A1- 1 863 165
- EP-A1- 2 696 464
- EP-A2- 2 244 352
- US-A1- 2005 116 671

## Beschreibung

Die Erfindung betrifft ein Solarkraftwerk, bei dem eine Umwandlung des von Solarmodulen eines Solarmodulfeldes gelieferten Gleichstromes in netz- oder gebrauchskonformen Wechsel- oder Drehstrom erfolgt mit einem durch den Gleichstrom der Solarmodule angetriebenen Gleichstrommotor und mit einem Wechselstromgenerator, der an die Welle des Gleichstrommotors angekoppelt ist und der ausgangsseitig direkt an ein Netz oder an Verbraucher anschließbar oder angeschlossen ist, sowie mit einer Steuerung und mit Schaltanlagen für den Betriebslauf des Solarkraftwerkes.

In konventionellen Solaranlagen werden ausnahmslos elektronische Wechselrichter zur Wandlung des von den Solarmodulen gelieferten Gleichstromes in netz- oder gebrauchskonformen Wechsel- oder Drehstrom eingesetzt. Infolge des Einsatzes dieser elektronischen Wechselrichter sind alle konventionellen Solaranlagen Erzeugungseinheiten für elektrische Energie vom Typ 2.

Eine Erzeugungseinheit für elektrische Energie ist dabei eine nach bestimmten Kriterien abgrenzbare Anlage eines Kraftwerkes. Es kann sich dabei u.a. um einen Kraftwerksblock, ein Sammelschienen- Kraftwerk, eine GuD-Anlage, eine Windenergieanlage, um den Maschinensatz eines Wasserkraftwerkes, um einen Brennstoffzellenstapel oder um ein Solarmodul handeln.

Eine Erzeugungseinheit vom Typ 1 liegt vor, wenn ein Synchrongenerator direkt mit dem Netz gekoppelt ist. Eine Erzeugungseinheit vom Typ 2 liegt vor, wenn diese Bedingung nicht erfüllt ist.
Konventionelle Solaranlagen können zwar netzparallel oder eingeschränkt auch im Inselbetrieb arbeiten, benötigen aber immer in dem Netz, an das sie angeschlossen sind, ein Mehrfaches ihrer eigenen Leistung an konventioneller Kraftwerkskapazität (must run capacity) damit sie einerseits selbst überhaupt funktionieren und andererseits die Netzstabilität durch das Fehlen von Systemdienstleistungen für das Netz, die bei gegenwärtigem Stand der Technik nahezu ausschließlich durch konventionelle Kraftwerke erbracht werden kann, nicht gefährdet wird.

Gerade im Zusammenhang mit der zunehmenden Nutzung erneuerbarer Energien bis hin zum vollständigen Ersatz atomar- fossiler Kraftwerke ist es erforderlich, diese Kraftwerke, ausnahmslos Erzeugungseinheiten für elektrische Energie vom Typ 1, durch ebensolche mit erneuerbaren Energien gespeiste Kraftwerke vom Typ 1 zu ersetzen. Konventionelle Solaranlagen, ausnahmslos Erzeugungseinheiten für elektrische Energie vom Typ 2, können genau das nicht.

Da einzig und allein der Synchrongenerator eine Erzeugungsanlage für elektrische Energie vom Typ 1 ausmacht, ist es unumgänglich, vermittels eines solchen Synchrongenerators die Wandlung der erneuerbaren Primärenergie in netzkonformen Wechsel- oder Drehstrom zu wandeln. Speziell ein Induktions- Synchrongenerator ist deshalb erforderlich, damit sein Leistungsfaktor einstellbar ist und damit bedarfsabhängig Blindleistung an das Netz als unverzichtbarer Bestandteil der von Kraftwerken zu erbringenden Systemdienstleistungen geliefert werden kann.

In der DE 10 2008 046 606 A1 wird ein Verfahren zum Betrieb einer Photovoltaik- Anlage mit einer Vielzahl von Photovoltaik- Modulen und mit einem an die Photovoltaik-Module angeschlossenen Gleichstrommotor vorgeschlagen. Die Motorachse ist an eine Welle eines Drehstromgenerators angekoppelt, wobei der Drehstromgenerator an ein Stromversorgungsnetz anschließbar ist. Die Motorachse eines zweiten Gleichstrommotors ist ebenfalls mit der Welle verbindbar, und die von den Photovoltaik- Modulen erzeugte elektrische Energie (Q1, Q2) wird zunächst nur zum Antrieb eines Gleichstrommotors verwendet und im weiteren Betriebsverlauf auf beide Gleichstrommotoren aufgeteilt. Der Ersatz eines einzigen großen Gleichstrommotors durch zwei kleinere, getrennt zuschaltbare Gleichstrommotoren mit geringerer Nennleistung soll das Aufschalten der PV-Anlage an das Versorgungsnetz erleichtern.

Aus der EP 2 696 464 A1 ist weiter ein Photovoltaik-Kraftwerk bekannt
- mit Photovoltaikmodulen zur Stromerzeugung, die zu mehreren Strängen zusammengeschaltet sind,
- mit einem ersten zentralen Umformer zur Wandlung von den Photovoltaikmodulen erzeugter elektrischer Energie in elektrische Energie mit einer Spannung, die eine Spannungsform hat, die einer Spannungsform einer Spannung in einem Versorgungsnetz entspricht, und
- mit einem Ausgang zur Einspeisung des gewandelten Stroms in das Versorgungsnetz,
- wobei der erste zentrale Umformer wenigstens einen Elektromotor und einen Synchron-Generator aufweist, deren Wellen miteinander gekoppelt sind,
- wobei das Photovoltaik-Kraftwerk
- entweder einen zweiten zentralen Umformer, nämlich einen Zentralwechselrichter, zum Wandeln des von den Photovoltaik-Modulen erzeugbaren Gleichstroms in einen Wechselstrom aufweist
- oder dezentrale Umformer, insbesondere Strangwechselrichter aufweist, von denen je einer in einen der Stränge geschaltet ist, um den von den Photovoltaik-Modulen eines Strangs erzeugbaren Gleichstrom in einen Wechselstrom zu wandeln, und
- wobei der Elektromotor des ersten zentralen Umrichters ein Asynchronmotor ist.

Darüber hinaus ist wenigstens eine der Wellen mit einer Schwungmasse verbunden oder eine Schwungmasse ist von einer der Wellen antreibbar.

Bekannt ist es weiter, dass der Wirkungsgrad von Reluktanz-Synchronmotoren im Einsatz als Antriebsmaschine gegenüber Asynchronmotoren wesentlich höher liegt (BROSCH, P. F.; KLUGER, R.: EI4-Synchron-Reluktanzmotor: Die Hochwirkungsgrad-Alternative zum Asynchronmotor, 08.05.2013, Vogel Business Media GmbH & Co. KG).

Ein Beitrag von Wlanman offenbart bereits, dass der von den Solarmodulen gelieferte Strom direkt parallel (ohne weiteren Ladeumrichter) in einen Pufferspeicher geleitet werden kann und so die Solarmodule und der Pufferspeicher parallel zum jeweiligen Abnehmer der Gleichspannung geschaltet sind (Conrad Electronic SE Community: Wie läuft ein Solarmotor weiter, wenn die Quelle (eine Solarzelle) keinen Strom mehr liefert? (Diskussionsforum); Beitrag vom 04.11.2015, Seite 2).

Das Experimentbuch des unabhängigen Institut für Umweltfragen e. V. legt nahe, Solarzellen direkt an einen Speicher zu schließen und die gespeicherte Energie mitunter zur Versorgung von Verbrauchern zu verwenden (Unabhängiges Institut für Umweltfragen e. V., Berlin (Hrsg.): Lehrerbildung EE: Experimente für die Sekundarstufe (Klasse 7-10), Februar 2013, Seite 9 ff.).

Aufgabe der Erfindung ist es, ein Verfahren zum Betrieb eines Solarkraftwerkes zur Umwandlung des von den Solarmodulen eines Solarmodulfeldes gelieferten Gleichstroms optimiert in netz- oder gebrauchskonformen Wechsel- oder Drehstrom vorzuschlagen.

Gelöst wird diese Aufgabe mit den Verfahrensschritten des Anspruches 1. Vorteilhafte Ausgestaltungen sind Gegenstand der Unteransprüche.

Bei einem Solarkraftwerk, bei dem eine Umwandlung des von Solarmodulen eines Solarfeldes gelieferten Gleichstroms in netz- oder gebrauchskonformen Wechsel- oder Drehstrom erfolgt, mit einem durch den Gleichstrom der Solarmodule gespeisten Gleichstrommotor und mit einem Wechselstromgenerator, der an die Welle des Gleichstrommotors angekoppelt ist und der seinerseits an ein Netz oder an Verbraucher anschließbar oder angeschlossen ist, sowie mit einer Steuerung und mit Schaltanlagen für den Betriebslauf des Solarkraftwerkes, wobei der Gleichstrommotor ein Reluktanz- Synchronmotor ist, der mit dem Ausgang eines elektronischen Wechselrichters verbunden ist und mit diesem ein Antriebspaket bildet und dieses Antriebspaket einen Induktions- Synchrongenerator antreibt, der über eine AC-Schaltanlage mit dem Netz oder den Verbrauchern direkt verbunden ist, wobei der von den Solarmodulen gelieferte Gleichstrom in den Eingang des elektronischen Wechselrichters eingespeist wird und mindestens ein Batteriepufferspeicher direkt parallel zu diesem Eingang geschaltet ist, wird verfahrensgemäß vorgeschlagen, dass das Drehmoment, das dem Induktions-Synchrongenerator zugeführt wird, durch den elektronischen Wechselrichter bestimmt wird, indem er dafür sorgt, dass bei gesicherter Abnahme der von den Solarmodulen bereitgestellten Leistung, die Solarmodule annähernd in ihrem optimalen Betriebspunkt(MPP) arbeiten, wobei im Zusammenwirken mit der Steuerung eine Optimierung der Leistungsabgabe im Sinne eines MPP- Tracking erfolgt, dass bei nicht gesicherter Abnahme der Leistung der Solarmodule im Zusammenwirken mit der Steuerung die Leistung des Induktions- Synchrongenerators abgeregelt wird, wobei ein Arbeitspunkt jenseits des aktuellen MPP angefahren wird, und
dass zum Hochfahren aus dem Stillstand und zum Betrieb des Reluktanz- Synchronmotors und des mit ihm mechanisch verbundenen Induktions- Synchrongenerators der Wechselrichter gemeinsam aus dem Gleichstrom der Solarmodule und dem Gleichstrom aus dem Batteriepufferspeicher gespeist wird.

Eine vorteilhafte Ausgestaltung des Verfahrens sieht vor, dass beim Zuschalten des Induktions- Synchrongenerators mittels der AC-Schaltanlage auf ein Netz, das bereits eine Spannung führt, mittels der Steuerung vermittels einer Synchronisationseinrichtung eine Ansynchronisation erfolgt, wobei die dazu erforderliche Drehzahlvariabilität vom Wechselrichter sichergestellt wird, sodass eine leistungslose Netzzuschaltung vorgenommen wird.

Weiterhin ist es von Vorteil, wenn der Batteriepufferspeicher hinsichtlich seiner Kapazität so ausgelegt ist, dass er bedarfsgerecht den Betrieb des Antriebspaketes und des Induktions-Synchrongenerators mit verringerter Leistung ohne Energiezufuhr von außen für eine vorgebbare Dauer aufrecht erhalten kann.

Die mit der Erfindung erzielten Vorteile bestehen insbesondere darin, dass
- mit der Erfindung echte Solarkraftwerke geschaffen werden, die in der Lage sind, konventionelle Kraftwerke vollwertig zu ersetzen und damit unverzichtbarer technisch- technologischer Bestandteil einer jeden Energiewende weg von atomar- fossilen Primärenergien hin zu erneuerbaren Energien wird,
- das Antriebspaket eine moderne technische Lösung darstellt, die auf dem neuesten, gegenwärtig höchsten erreichbaren Effizienzstand beruht,
- trotz der höchsten gegenwärtig erreichbaren Effizienz von Antriebslösungen in den Motoren keine Permanentmagnete und damit keine als bedenklich anzusehenden Materialien auf der Grundlage Seltener Erden verwendet werden,
- und die Motoren hinsichtlich Handling, Pflege, Wartung und Instandsetzung den bekannten Asynchronmotoren entsprechen und demzufolge keine besonderen Kenntnisse oder Fähigkeiten erfordern.

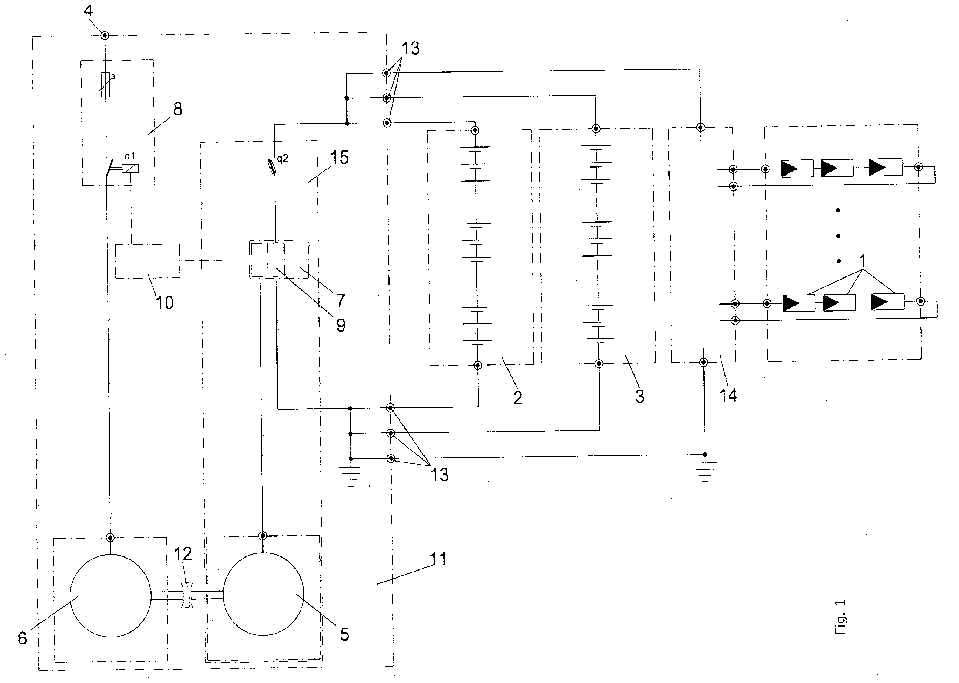

Die Erfindung soll anhand der Zeichnung erläutert werden.

Das Solarkraftwerk besteht aus:
- einem in einem Maschinenumformergehäuse 11 angeordneten Induktions-Synchrongenerator 6, einem Reluktanz. Synchronmotor 5, einem elektronischen Wechselrichter 7 und der AC Schaltanlage 8, wobei letztere im Hier gebrauchten Sinn eine Anlage ist, die in einem gemeinsamen Gehäuse (Schaltschrank) alle Schaltgeräte, Sicherungen, Steuerungen, und sonstigen Komponenten enthält, die zur Verbindung des Netzes 4 oder der Verbraucher mit dem Induktions- Synchrongenerator 6 erforderlich sind,
- einem Batteriepufferspeicher 2,
- optional einem Zusatz-Batteriepufferspeicher 3,
- Anschaltboxen 14 der Solarmodule 1 zum Anschalten, Überwachen und Sichern der Solarmodule 1 und
- dem Solarfeld in unterschiedlichen Ausführungen, gebildet aus den Solarmodulen 1.

Das Maschinenumformergehäuse 11 z. B. ein Container, weist Schnittstellen 13 mindestens zum Anschluss der von den Solarmodulen 1, von dem Batteriepufferspeicher 2 und von den Zusatzspeichern 3 kommenden elektrischen Leiter auf sowie zum Anschluss an das Netz oder Verbraucher 4. Weitere Schnittstellen 13 können z. B. Steuerleitungen betreffen.

Damit steht eine autarke Einheit zur Verfügung, die neben dem Solarmodulfeld aufstellbar ist. Grundsätzlich bestünde auch die Möglichkeit, die Batteriepufferspeicher 2 und soweit vorhanden, die Batteriezusatzspeicher 3 mit in das Maschinenumformergehäuse 11 zu integrieren.

Die Wellen der beiden elektrischen Maschinen, des Induktions-Synchrongenerators 6 und des Reluktanz-Synchronmotors 5, sind vermittels einer elastischen Kupplung 12 miteinander verbunden.

Beide elektrische Maschinen sind auf einem gemeinsamen Trägerrahmen aufgeschraubt. Ihre Wellen sind ausgerichtet und gefluchtet. Die Verbindung der beiden Wellen erfolgt über eine elastische Kupplung 12, die einen eventuellen geringfügigen Fluchtungs- und/oder Winkelversatz der beiden Maschinenwellen zueinander ausgleicht. Dadurch ist ein ruhiger und schwingungsarmer Lauf der Maschinen gesichert.

Der Trägerrahmen selbst steht auf Schwingungsdämpfern auf dem Boden. Die Schwingungsdämpfer sind jeweils unter dem Masseschwerpunkt der beiden Maschinen angeordnet.

Der Reluktanz- Synchronmotor 5 ist direkt mit dem Ausgang des elektronischen Wechselrichters 7 verbunden und bildet mit ihm zusammen das Antriebspaket 15. Vom Wechselrichter 7 wird der Ständer des Reluktanz- Synchronmotors 5 gespeist.

Der Stator des Induktions- Synchrongenerators 6 ist über eine AC- Schaltanlage 8 mit dem Netz oder den Verbrauchern 4 direkt verbunden. Die Erregung der fremderregten Erregermaschine im Inneren des bürstenlosen Induktions- Synchrongenerators erfolgt ebenfalls von der AC-Schaltanlage aus.

Der Batteriepufferspeicher 2 ist hinsichtlich seiner Kapazität so bemessen, dass er bedarfsgerecht die Arbeit des Antriebspaketes 15, gegebenenfalls mit einer verringerten Leistung, ohne zusätzliche Energiezufuhr von außen für eine erforderliche Dauer aufrechterhalten kann. Hinsichtlich seiner in Reihe geschalteten Zellenzahl ist der Batteriepufferspeicher 2 so ausgelegt, dass seine vom Ladezustand abhängige Ausgangsspannung der MPP-Kennlinie des Solarfeldes weitestgehend folgt und im zulässigen Bereich der Eingangsspannung des elektronischen Wechselrichters 7 liegt.

Der Batteriepufferspeicher 2 sichert den Hochlauf des Antriebspaketes 15 aus dem Stillstand auch dann, wenn von den Solarmodulen 1 dafür nicht oder noch nicht genügend Leistung bereitgestellt werden kann. Vor dem Hochlauf wird die schon von den Solarmodulen gelieferte Energie im Batteriepufferspeicher 2 gespeichert. Die Speicherkapazität kann durch Zusatz- Batteriepufferspeicher 3 beliebig erhöht werden.

Der Hochlauf wird mit dem Zuschalten des Induktions-Synchrongenerators 6 auf die Verbraucher oder das Netz 4 abgeschlossen. Führt das Netz 4 bereits Spannung, ist durch die Steuerung 10 vermittels einer Synchronisationseinrichtung eine Ansynchronisation vorzunehmen, wobei die dazu erforderliche Drehzahlvariabilität vom Wechselrichter 7 sichergestellt wird, sodass der generatorisch laufende Induktions- Synchrongenerator 6 leistungslos an das Netz angeschaltet werden kann. Ist diese Zuschaltung erfolgt, bestimmt ausschließlich nur noch die Netzfrequenz die Drehzahl des Induktions-Synchrongenerators 6 und damit auch des Reluktanz-Synchronmotors 5.

Liefert das Antriebspaket 15 kein hinreichendes Antriebsmoment, geht der ans Netz geschaltete Induktions-Synchrongenerator 6 in den motorischen Betrieb über und treibt nun seinerseits den Reluktanz- Synchronmotor 5 an. Dieser kann aber nicht in den generatorischen Betrieb übergehen und läuft stattdessen im Leerlauf mit. Der motorisch laufende Induktions- Synchrongenerator 6 bezieht eine geringe Wirkleistung vom Netz, die er zur Überwindung der Reibungsverluste benötigt. Durch eine entsprechende Einstellung der Erregung arbeitet der Induktions-Synchrongenerator 6 nun im motorischen Phasenschieberbetrieb und kann wahlweise induktive oder kapazitive Blindleistung an das Netz abgeben. Der Übergang zwischen dem motorischen und dem generatorischen Betrieb erfolgt selbständig und gleitend.
Bei laufendem Antriebspaket 15 und Induktions-Synchrongenerator 6 wird die dem Induktions-Synchrongenerator abgeforderte Leistung entweder von den Solarmodulen 1 geliefert, wobei ein eventueller Leistungsüberschuss der Solarmodule 1 im Batteriepufferspeicher 2 gespeichert wird, oder aber vom Batteriepufferspeicher 2 bereitgestellt, wenn die abgeforderte Leistung nicht von den Solarmodulen 1 gedeckt werden kann. Auch dieser Übergang erfolgt selbständig und gleitend.
Welches Drehmoment dem Induktions- Synchrongenerator 6 zugeführt wird, wird ausschließlich vom Wechselrichter 7 bestimmt. Auf diese Weise erfolgt auch die Beeinflussung der in das Netz 4 abzugebenden bzw. der für den Eigenverbrauch bereitzustellenden Wirkleistung. Ist für die gesamte von den Solarmodulen 1 bereitgestellte Leistung die Abnahme gesichert, arbeitet das Solarkraftwerk im jeweiligen Leistungsmaximum. Der Wechselrichter 7 sorgt dafür, dass die Solarmodule 1 annähernd in ihrem MAXIMUM POWER POINT (MPP) arbeiten. Der Wechselrichter 7 führt unter dem Einfluss der Steuerung ununterbrochen die Optimierung der Leistungsabgabe im Sinne eines MPP-Tracking durch und reagiert damit u.a. auf die sich ständig ändernden Einstrahlungsbedingungen auf die Solarmodule 1 einerseits und die aktuellen Abnahmebedingungen für die gewonnene Elektroenergie andererseits.

Ist die Abnahme der Leistung von den Solarmodulen 1 nicht möglich, weil beispielsweise das Netz 4 ausgefallen oder die Aufnahme durch das Netz 4 anderweitig eingeschränkt ist und der Eigenbedarf, beispielsweise zum Aufladen der Batteriepufferspeicher 2, das nicht ausgleichen kann, wird vom Wechselrichter 7 das Antriebsmoment des Reluktanz-Synchronmotors und damit die Leistung des Induktions-Synchrongenerators 6 reduziert, indem ein Arbeitspunkt jenseits des aktuellen MPP angefahren wird. Im Extremfall kann das Solarkraftwerk in den zeitlich unbeschränkten Leerlauf überführt werden, d.h. keine Leistung abzugeben, ohne sich zwingend vom Netz 4 trennen zu müssen. Ob und wie lange ein Betrieb im Leerlauf in Erwartung sich ändernder äußerer Bedingungen zugelassen wird, entscheidet die Steuerung 10 auf Grundlage der ihr erteilten Parametrierung wesentlicher technischer und auch wirtschaftlicher Betriebsparameter.

Im Netzparallelbetrieb kann der Induktions-Synchrongenerator 6 auf Anforderung des Netzbetreibers reine Blindleistung bis annähernd zur vollen Nennscheinleistung des Induktions- Synchrongenerators im generatorischen Betrieb bereitstellen oder aber im motorischen Betrieb als reine Phasenschiebermaschine laufen. Da beide elektrischen Maschinen bürstenlos sind, bestehen dabei keinerlei Probleme hinsichtlich eines übermäßigen Verschleißes leer laufender stromloser Bürsten.

### Bezugszeichenliste

- 1: Solarmodule eines Solarfeldes
- 2: Batteriepufferspeicher
- 3: Zusatz- Batteriepufferspeicher, optional
- 4: Netz oder Verbraucher
- 5: Reluktanz- Synchronmotor
- 6: Induktions- Synchrongenerator
- 7: Wechselrichter
- 8: AC- Schaltanlage
- 9: DC- Zwischenkreis, Eingang des Wechselrichters
- 10: Steuerung
- 11: Maschinenumformergehäuse
- 12: Elastische Kupplung
- 13: Schnittstellen
- 14: Anschaltbox der Solarmodule
- 15: Antriebspaket
- q1: AC-Sicherungstrennschalter
- q2: DC-Schaltschütz

## Patentansprüche

1. Verfahren zum Betrieb eines Solarkraftwerkes, bei dem eine Umwandlung des von Solarmodulen eines Solarmodulfeldes gelieferten Gleichstroms in netz- oder gebrauchskonformen Wechsel- oder Drehstrom erfolgt mit einem Gleichstromantrieb in Form eines Reluktanz-Synchronmotors (5), der mit dem Ausgang eines elektronischen Wechselrichters (7) verbunden ist und mit diesem ein Antriebspaket (15) bildet und mit einem Wechsel- oder Drehstromgenerator in Form eines Induktions- Synchrongenerator (6), der über eine AC-Schaltanlage (8) mit dem Netz oder den Verbrauchern (4) direkt verbunden ist, wobei der von den Solarmodulen (1) gelieferte Gleichstrom in den Eingang des elektronischen Wechselrichters (7) eingespeist wird und ein Batteriepufferspeicher (2) direkt parallel zum Eingang des elektronischen Wechselrichters (7) geschaltet ist, **dadurch gekennzeichnet, dass**
das Drehmoment, das dem Induktions- Synchrongenerator (6) zugeführt wird, durch den Wechselrichter (7) bestimmt wird, indem er dafür sorgt,
dass bei gesicherter Abnahme die von den Solarmodulen (1) bereitgestellte Leistung, annähernd im optimalen Betriebspunkt der jeweiligen Leistungskennlinie (MPP) gewonnen wird, wobei im Zusammenwirken mit der Steuerung (10) eine Optimierung der Leistungsabgabe im Sinne eines MPP- Tracking erfolgt,
dass bei nicht gesicherter Abnahme der Leistung der Solarmodule (1) im Zusammenwirken mit der Steuerung (10) die Leistung des Induktions- Synchrongenerators (6) abgeregelt wird, wobei ein Arbeitspunkt jenseits des aktuellen MPP angefahren wird, oder aber Solarmodule (1) des Solarfeldes vermittels der Anschaltbox (14) der Solarmodule (1) vollständig abgeschaltet werden,
dass ständig zum Betrieb des Antriebspaketes (15) am Eingang von dessen elektronischem Wechselrichter (7) immer eine eventuell zu geringe Leistung der Solarmodule (1) vom Batteriepufferspeicher (2) ergänzt wird oder aber ein Leistungsüberschuss der Solarmodule (1) zur Aufladung der Batterien des Batteriepufferspeichers (2) solange verwendet wird, wie deren volle Aufnahmekapazität noch nicht erreicht ist.

2. Verfahren nach Anspruch 1, **dadurch gekennzeichnet, dass**
vor dem Zuschalten des Induktions- Synchrongenerators (6) mittels der AC- Schaltanlage (8) auf ein Netz (4), das bereits eine Spannung führt, mittels der Steuerung (10) vermittels einer Synchronisationseinrichtung eine Ansynchronisation an dieses Netz (4) erfolgt, wobei die dazu erforderliche Drehzahlvariabilität vom Wechselrichter (7) sichergestellt wird, sodass im Ergebnis der Synchronisation eine leistungslose Netzzuschaltung erfolgt.

3. Verfahren nach Anspruch 1 oder 2, **dadurch gekennzeichnet, dass**
die in Reihe geschaltete Zellenzahl des Batteriepufferspeichers (2) so ausgelegt ist, dass ihre vom Ladezustand abhängige Ausgangsspannung der Höchstleistungskennlinie (MPP) der Solarmodule (1) des Solarfeldes weitestgehend folgt und im zulässigen Bereich der Eingangsspannung des elektronischen Wechselrichters (7) liegt.

## Claims

1. A method for operating a solar power plant, in which a conversion of the direct current delivered by solar modules of a solar module array into a grid-compatible or usage-suitable alternating or three-phase current is carried out by a direct current drive in the form of a reluctance synchronous motor (5) which is connected with the output of an electronic inverter (7) and forms therewith a drive package (15), and by an alternating current or three-phase alternator in the form of an induction synchronous generator (6), which is directly connected via an AC switchgear unit (8) to the grid or the consumer units (4), wherein the direct current delivered by the solar modules (1) is fed into the input of the electronic inverter (7) and a battery backup unit (2) is connected directly parallel to the input of the electronic inverter (7), **characterized in that**
the torque supplied to the induction synchronous generator (6) is determined by the inverter (7), the latter ensuring
that if acceptance is assured, the power provided by the solar modules (1) is obtained approximately at the optimum operating point of the respective power characteristic (MPP), wherein, in cooperation with the control unit (10), power output is optimized in terms of MPP tracking,
that if acceptance of the power from the solar modules (1) is not assured, the power of the induction synchronous generator (6) is regulated in cooperation with the control unit (10), wherein an operating point beyond the current MPP is approached, or alternatively solar modules (1) of the solar array are switched off completely by means of the connection box (14) of the solar modules (1),
that for constant operation of the drive package (15), if the power from the solar modules (1) is too low at the input of the electronic inverter (7) of said drive package (15) it is always supplemented by the battery backup unit (2), or alternatively surplus power from the solar modules (1) is used to charge the batteries of the battery backup unit (2) as long as the full capacity thereof has not as yet been reached.

2. The method according to Claim 1, **characterized in that**
before the induction synchronous generator (6) is connected by means of the AC switchgear unit (8) to a grid (4) which is already carrying a voltage, synchronization to this grid (4) is performed by the control unit (10) by means of a synchronization device, wherein the speed variability necessary therefore is ensured by the inverter (7) such that the synchronization results in powerless connection to the grid.

3. The method according to Claim 1 or 2, **characterized in that**
the series-connected number of cells of the battery backup unit (2) is designed such that its output voltage, which is dependent on the state of charge, very largely follows the maximum power characteristic (MPP) of the solar modules (1) of the solar array and lies in the admissible range of the input voltage of the electronic inverter (7).

## Revendications

1. Procédé de fonctionnement d'une centrale solaire, où une conversion du courant continu fourni par des modules solaires d'un champ de modules solaires en courant alternatif ou triphasé conforme au réseau ou à la charge est réalisée avec un entraînement à courant continu sous la forme d'un moteur à réluctance synchrone (5) relié à la sortie d'un onduleur électronique (7) et formant un ensemble d'entraînement (15) avec celle-ci, et avec une génératrice à courant alternatif ou triphasé sous la forme d'une génératrice synchrone à induction (6), directement reliée au réseau ou aux récepteurs (4) par une installation de distribution à courant alternatif (8), le courant continu fourni par les modules solaires (1) étant appliqué à l'entrée de l'onduleur électronique (7) et un réservoir d'accumulation de batterie (2) étant connecté directement en parallèle à l'entrée de l'onduleur électronique (7), **caractérisé en ce**
**que** le couple conduit vers la génératrice synchrone à induction (6) est défini par l'onduleur (7), celui-ci permettant
**qu'**en cas de prélèvement assuré, la puissance fournie par les modules solaires (1) est obtenue sensiblement au point de fonctionnement optimal de la caractéristique de puissance (MPP) respective, une optimisation de la puissance délivrée étant effectuée au sens d'un suivi de MPP en coopération avec la commande (10),
**qu'**en cas de prélèvement non assuré de la puissance des modules solaires (1), la puissance de la génératrice synchrone à induction (6) est régulée en coopération avec la commande (10), un point de travail étant atteint au-delà de la MPP actuelle, voire des modules solaires (1) du champ solaire sont complètement désactivés au moyen du boîtier de commande (14) des modules solaires (1),
**que** pour le fonctionnement constant de l'ensemble d'entraînement (15) à l'entrée de l'onduleur électronique (7) de celui-ci, une puissance éventuellement trop faible des modules solaires (1) est toujours complétée par le réservoir d'accumulation de batterie (2), voire un excédent de puissance des modules solaires (1) est utilisé pour la charge des batteries du réservoir d'accumulation de batterie (2) tant que leur pleine capacité d'absorption n'est pas atteinte.

2. Procédé selon la revendication 1, **caractérisé en ce**
**qu'**avant connexion à un réseau (4) déjà sous tension de la génératrice synchrone à induction (6) au moyen de l'installation de distribution à courant alternatif (8), une synchronisation audit réseau (4) est effectuée par la commande (10) au moyen d'un dispositif de synchronisation, la variabilité de régime exigée à cet effet étant assurée par l'onduleur (7), de telle manière que la synchronisation aboutit à une connexion exempte de puissance au réseau.

3. Procédé selon la revendication 1 ou la revendication 2, **caractérisé en ce que**
le nombre de cellules connectées en série du réservoir d'accumulation de batterie (2) est prévu pour que leur tension de sortie dépendante de l'état de charge suive de près la caractéristique de puissance maximale (MPP) des modules solaires (1) du champ solaire et se situe dans la plage admissible de la tension d'entrée de l'onduleur électronique (7).
